(19) Europäisches Patentamt
European Patent Office
Office européen des brevets

(11) **EP 1 451 530 B1**

(12) **EUROPÄISCHE PATENTSCHRIFT**

(45) Veröffentlichungstag und Bekanntmachung des Hinweises auf die Patenterteilung:
**31.01.2007 Patentblatt 2007/05**

(21) Anmeldenummer: **02792631.0**

(22) Anmeldetag: **03.12.2002**

(51) Int Cl.:
*G01D 3/024* $^{(2006.01)}$   *G06T 9/00* $^{(2006.01)}$

(86) Internationale Anmeldenummer:
**PCT/DE2002/004428**

(87) Internationale Veröffentlichungsnummer:
**WO 2003/054483 (03.07.2003 Gazette 2003/27)**

(54) **SENSORANORDNUNG MIT AUSLESEMITTELN ZUR DIFFERENZBILDUNG**

SENSOR ARRANGEMENT WITH READ-OUT MEANS FOR DIFFERENCE GENERATION

ENSEMBLE CAPTEUR DOTE DE DISPOSITIFS DE LECTURE POUR DETERMINER DES VALEURS DIFFERENTIELLES

(84) Benannte Vertragsstaaten:
**DE FR GB**

(30) Priorität: **10.12.2001 DE 10160527**

(43) Veröffentlichungstag der Anmeldung:
**01.09.2004 Patentblatt 2004/36**

(73) Patentinhaber: **SIEMENS AKTIENGESELLSCHAFT**
**80333 München (DE)**

(72) Erfinder:
• **WEVER, Utz**
  **82346 Andechs (DE)**
• **ZHENG, Qinghua**
  **82024 Taufkirchen (DE)**

(56) Entgegenhaltungen:
**WO-A-97/02705**      **US-A- 5 574 275**

**Beschreibung**

Die Erfindung betrifft eine Sensoranordnung mit einer Mehrzahl von Sensorelementen, durch die Messwerte messbar sind, und mit Auslesemitteln zum Auslesen der Messwerte aus den Sensorelementen.

Weiterhin betrifft die Erfindung ein Verfahren zum Auslesen von Sensorelementen.

Sensoranordnungen mit einer Mehrzahl von Sensorelementen sind beispielsweise aus elektronischen Kameras bekannt. Hier wird über ein Linsensystem ein Bild auf einen CCD (Charge Coupled Device) abgebildet. Durch den CCD wird das Bild mittels einer Messung aufgenommen.

Das so aufgenommene Bild hat aufgrund der großen Anzahl der auf einem CCD vorhandenen Sensorelemente einen sehr hohen Speicherbedarf und auch einen sehr hohen Übertragungsbedarf bei der Übertragung des Bildes von der Kamera zur Weiterverarbeitung.

Deshalb ist es bekannt, das Bild einem Kompressionsverfahren zu unterziehen. Hierfür haben sich insbesondere Wavelet-Transformationen mit anschließender Kompression durchgesetzt, da sie zu einer sehr hohen Kompressionsrate führen und auch bei nur teilweiser Übertragung der Daten immer noch ein großer Teil des Bildinhalts rekonstruiert werden kann.

Die Wavelet-Transformationen machen allerdings nicht den Speicher in der Kamera obsolet, da das Bild vor der Transformation zunächst zwischengespeichert werden muss. Darüber hinaus wird für die Transformation eine zusätzliche Prozessoreinheit benötigt, um die Transformation durchzuführen. Dadurch wird die Kamera teurer und hat einen erhöhten Energiebedarf.

Davon ausgehend liegt der Erfindung die Aufgabe zugrunde, Bilder so aufzunehmen, dass bereits bei der Aufnahme eine gut komprimierbare Darstellung des Bildinhalts entsteht und auf eine zusätzliche Prozessoreinheit verzichtet werden kann.

Diese Aufgabe wird durch die Erfindungen gemäß den unabhängigen Ansprüchen gelöst. Vorteilhafte Ausgestaltungen ergeben sich aus den Unteransprüchen.

Demnach weist die Sensoranordnung eine Mehrzahl von Sensorelementen auf, durch die Messwerte messbar sind. Darüber hinaus verfügt die Sensoranordnung über Auslesemittel zum Auslesen der Messwerte aus diesen Sensorelementen. Die Sensoranordnung ist so ausgebildet, dass zur Durchführung einer Gesamtmessung nacheinander mehrere Teilmessungen durchgeführt werden. Der Begriff Teilmessungen bezieht sich hierbei auf den zeitlichen Ablauf, bei dem mehrere Teilmessungen nacheinander durchgeführt werden, die zusammen die Messwerte für die gewünscht Gesamtmessung ergeben. Deshalb werden die Teilmessungen durch Beteiligung jeweils zumindest annähernd der gleichen, insbesondere aller Sensorelemente durchgeführt.

Die Auslesemittel sind ausgebildet, um das Auslesen der Sensorelemente so zu schalten, dass bei den jeweiligen Teilmessungen die Messwerte jeweils unterschiedlicher Sensorelemente zur Differenzbildung addiert und subtrahiert werden. Dadurch werden bei jeder Teilmessung nicht mehr Absolutwerte für die einzelnen Sensorelemente gemessen, sondern nur noch Differenzen der Messwerte der Sensorelemente untereinander, die sich aus den für jede Teilmessung definierten Kombinationen der Sensorelemente ergeben. Dabei wird bei jeder Teilmessung eine andere Differenz gebildet, um so die gewünschte Information, beispielsweise eines Bildes, für die Gesamtmessung zu erzielen.

Für die Sensoranordnung geht man damit vom gleichen Gedanken aus, wie die bereits zur Nachbearbeitung bekannte Wavelet-Transformation. In beiden Fällen werden in erster Linie durch Kombinationen von Bildpunkten Differenzwerte ermittelt. Dies geschieht in dem Wissen, dass in einem Bild zwischen zwei Bildpunkten oft die Differenz verschwindet, so dass diese verschwindenden Differenzen gemeinsam komprimiert oder ganz weggelassen werden können.

Im Gegensatz zu einer nachträglich vorgenommenen Wavelet-Transformation werden bei der Sensoranordnung allerdings die Sensorelemente durch die Auslesemittel gleich so ausgelesen, dass das Ausleseergebnis von vornherein Differenzwerte und keine Absolutwerte enthält. Dadurch kann auf einen Prozessor zur Nachbearbeitung verzichtet werden.

Von großer Bedeutung ist hierbei, wie die Auslesemittel das Auslesen der Sensorelemente bei den jeweiligen Teilmessungen schalten, das heißt, wie sie jeweils positive und negative Sensorelemente zusammenfassen, damit man aus den Ergebnissen der Teilmessungen möglichst vollständig die Gesamtmessung aufbauen kann. Dabei sollen nur so wenige Teilmessungen durchgeführt werden wie möglich und/oder jede Teilmessung sollte so schnell wie möglich durchgeführt werden.

Diese Forderungen erfüllt man, indem man die Sensorelemente bei jeder Teilmessung so positiv und negativ zusammenfasst, also so aufaddierend und subtrahierend ausliest, dass sie jeweils den Basisvektor einer Basis ergeben, in der sich das Ergebnis der Gesamtmessung darstellen lässt. Durch dieses Vorgehensweise erhält man keine redundanten Informationen und benötigt deshalb nur eine minimale Anzahl von Messungen. Andererseits kommt es aber auch zu keinem Informationsverlust.

Vorzugsweise ist die Basis die Basis einer Wavelet-Transformation. Insbesondere kann dies die Haar-Basis sein, da sich herausgestellt hat, dass diese schaltungstechnisch besonders einfach zu realisieren ist.

Alternativ können aber auch die Messwerte zumindest einiger Sensorelemente beim Addieren und Subtrahieren mit Vorfaktoren versehen werden. Dadurch ist es möglich, als Basis beispielsweise die Daubechies- und/oder die Gabor-Basis zu verwenden.

Die Sensorelemente sind vorzugsweise angeordnet, um räumliche verteilte Messwerte, insbesondere ein Bild, aufzunehmen. Dies kann zum Beispiel durch Anordnen der Sensorelemente in einer Ebene geschehen, wenn man eine Optik, beispielsweise aus Linsen, vorsieht, die das aufzunehmende Bild auf die in der Ebene angeordneten Sensorelemente abbildet.

Besonders kostengünstig lässt sich die Sensoranordnung herstellen, wenn die Sensorelemente Sensorelemente eines CCDs sind.

Vorzugsweise ist die Mehrzahl von Sensorelementen größer oder gleich 16. Für ein besonders einfaches Schalten sollte die Mehrzahl den Wert $2^n$, im zweidimensionalen Fall $4^n$, haben, wobei n eine natürliche Zahl ist.

Die Anzahl der Teilmessungen ist größer oder gleich 3, insbesondere größer oder gleich 5.

Zur Differenzbildung ist die Anzahl der Messwerte, die addiert wird, bei den Teilmessungen zumindest in etwa gleich der Anzahl der Messwerte, die subtrahiert wird. So ergibt sich eine verschwindende Differenz, wenn im Bild keine Intensitätsunterschiede auftreten.

Im Verlauf der Teilmessungen werden Sensorelemente und damit die Messwerte dieser Sensorelemente zu Gruppen zusammengefasst, in denen die Messwerte unterschiedlicher Sensorelemente jeweils für die Gruppe additiv und subtraktiv zusammengeschaltet werden. Das Zusammenfassen von Sensorelementen in Gruppen ist deshalb so vorteilhaft, weil bei Wahl einer geeigneten Basis, insbesondere einer Wavelet-Basis, die Messungen für die einzelnen Gruppen voneinander entkoppeln. Das heißt, die Ergebnisse der Teilmessungen werden für die einzelnen Gruppen unabhängig voneinander, so dass auch die Teilmessungen unabhängig voneinander durchgeführt werden können. Das Ergebnis der Gesamtmessung ist nicht mehr von einer Beziehung der Teilmessungen untereinander abhängig.

Wie bereits oben erwähnt, macht sich die Sensoranordnung insbesondere zu Nutze, dass die Differenzen der addierten und subtrahierten Messwerte der Sensorelemente in vielen Fällen verschwinden. Kann man die Teilmessungen in einer Reihenfolge durchführen, in der die Differenzen immer geringer werden müssen, so lässt sich die Folge der Teilmessungen abbrechen, wenn das Ergebnis des Addierens und Subtrahierens, also der Differenzwert, für eine Teilmessung unter einem vorgegebenen Schwellwert liegt. Man weiß dann, dass zukünftige Messungen nur noch Ergebnisse liefern werden, deren Informationsgehalt so gering ist, dass er nicht mehr von Interesse ist.

Oftmals lässt sich eine Reihenfolge der Teilmessungen, in der die Differenzen immer geringer werden müssen, aber nicht ex ante angeben. Als in der Praxis sehr geeignetes Abbruchkriterium für die Folge von Teilmessungen hat es sich deshalb erwiesen, keine weiteren Teilmessungen mehr durchzuführen, wenn eine gewünschte Auflösung erreicht ist. Dazu ist es sinnvoll die Teilmessungen so anzuordnen, dass Teilmessungen, die Grobinformationen liefern und deshalb nur eine geringe Belichtungszeit benötigen, zuerst durchgeführt werden, während Teilmessungen, die Feininformationen messen und deshalb länger dauern, später bzw. nach Erreichen der gewünschten Auflösung gar nicht mehr durchgeführt werden.

Die gewünschte Auflösung, nach deren Erreichen keine weiteren Teilmessungen mehr durchgeführt werden, kann insbesondere durch den Benutzer der Sensoranordnung einstellbar sein. Gemäß dieser Einstellung wird dann ermittelt, wie viele Teilmessungen durchzuführen sind.

Durch diesen vorzeitigen Abbruch der Messungen, lässt sich die Zeit deutlich verkürzen, die zur Aufnahme einer Gesamtmessung erforderlich ist. Dies ist natürlich bereits im Allgemeinfall von Vorteil, ganz besonders aber, wenn das Objekt, von dem das Bild aufzunehmen ist, durch die für die Aufnahme erforderliche Strahlung belastet werden kann. Dies ist beispielsweise bei Röntgenaufnahmen der Fall, aber auch bei normalen Aufnahmen von lichtempfindlichen Objekten. Hier kann die für die Aufnahme erforderliche Strahlung abgeschaltet werden, sobald die gewünschte Aufnahmequalität erreicht ist.

Für den Fall des Zusammenfassens von Sensorelementen zu Gruppen kann der Abbruch der Folge von Teilmessungen auch jeweils einzeln für die jeweiligen Gruppen vorgenommen werden. Hierdurch ergibt sich eine Reduzierung des Speicherbedarfs, da für Gruppen, für die keine Differenzen mehr gebildet werden, diese Differenzen auch nicht mehr gespeichert werden müssen.

Bei einem Verfahren zum Auslesen einer Mehrzahl von Sensorelementen, durch die Messwerte messbar sind, werden mit Auslesemitteln zum Auslesen der Messwerte aus den Sensorelementen zur Durchführung der Gesamtmessung nacheinander mehrere Teilmessungen durchgeführt. Dabei werden die Sensorelemente durch die Auslesemittel so geschaltet, dass bei den jeweiligen Teilmessungen die Messwerte jeweils für unterschiedliche Teilmessungen unterschiedlicher Sensorelemente addiert und subtrahiert werden.

Vorteilhafte Ausgestaltungen des Verfahrens ergeben sich analog zu den vorteilhaften Ausgestaltungen der Sensoranordnung.

Weitere wesentliche Vorteile und Merkmale der Erfindung ergeben sich aus der Beschreibung von Ausführungsbeispielen anhand der Zeichnung. Dabei zeigt:

Figur 1     Sensorelemente einer eindimensionalen Sensoranordnung sowie das Schalten der Sensorelemente durch Auslesemittel bei unterschiedlichen Teilmessungen;

Figur 2     bis 4 das Schalten von in Gruppen zusammengefassten Sensorelementen der eindimensionalen Sensoranordnung nach Figur 1 über der Zeit;

Figur 5     einen Schaltplan für eine zweidimensionale Sensoranordnung und

Figur 6     eine Blockdarstellung einer Sensoranordnung im allgemeinen Fall.

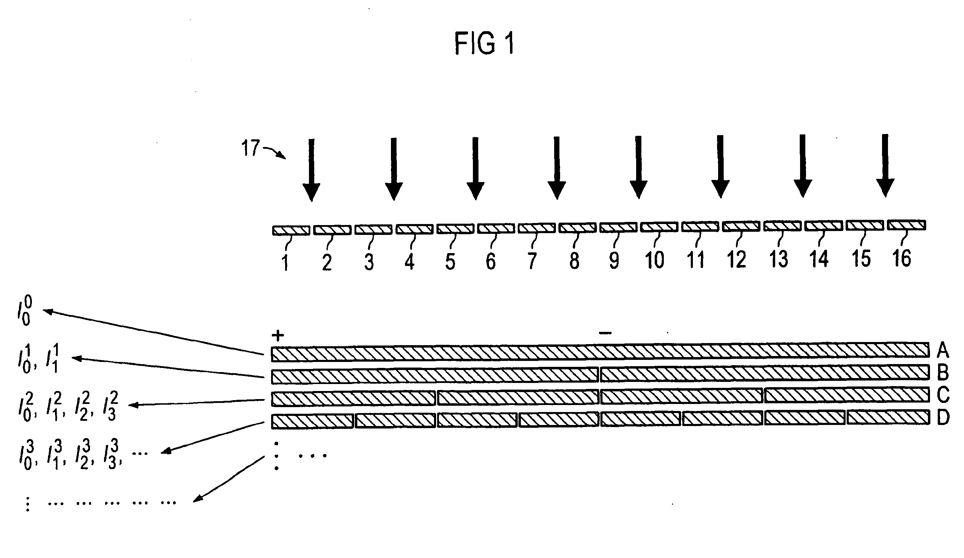

In Figur 1 erkennt man eine Sensoranordnung mit Sensorelementen 1 bis 16, die eindimensional entlang einer Linie angeordnet sind. Zwar wird ein Hauptanwendungsbereich der Sensoranordnung bei der Bildaufnahme liegen, für die sich eine zweidimensionale Anordnung von Sensorelementen in einer Ebene anbietet. Jedoch ergeben sich wesentliche Aspekte der Erfindung bereits im eindimensionalen Fall, so dass dieser zur Erleichterung des Verständnisses zuerst erläutert wird.

Die Sensorelemente 1 bis 16 sind nebeneinander angeordnet und messen elektromagnetische Strahlung 17 in Form von Licht, das auf die Sensorelemente 1 bis 16 fällt.

Unterhalb der Sensorelemente 1 bis 16 ist in Figur 1 schematisch dargestellt, wie die Auslesemittel die Sensorelemente 1 bis 16 in den Teilmessungen A bis D auslesen. Dabei wird immer die Hälfte der Sensorelemente positiv geschaltet, also addiert, und die andere Hälfte der Sensorelemente wird negativ geschaltet, also subtrahiert. Bei der erste Teilmessung A wird die Fläche der Sensorelemente 1 bis 16 einmal in der Mitte geteilt. Im dargestellten Ausführungsbeispiel werden die Messwerte der Sensorelemente 1 bis 8 der linken Hälfte addiert und die Messwerte der Sensorelemente 9 bis 16 der rechten Hälfte subtrahiert. Dazu werden die Sensorelemente in den beiden Hälften jeweils parallel geschaltet. Insgesamt ergibt sich für die Teilmessung A ein einziger Differenzwert $I_0^0$.

In der zweiten Teilmessung B werden die in Teilmessung A positiv geschalteten Sensorelemente 1 bis 8 und die in Teilmessung A negativ geschalteten Sensorelemente 9 bis 16 jeweils für sich in der Mitte geteilt, so dass die zur einen Hälfte der in Teilmessung A mit gleichem Vorzeichen ausgelesenen Messwerte gehörigen Messwerte addiert werden und die zur andern Hälfte der in Teilmessung A mit gleichem Vorzeichen ausgelesenen Messwerte gehörigen Messwerte subtrahiert werden.

Insgesamt ergeben sich bei der zweiten Teilmessung B zwei Gruppen, für die jeweils für sich ein Differenzwert gebildet wird. Dies führt zu zwei Differenzwerten $I_0^1$ und $I_1^1$. Sie folgen aus dem Addieren und Subtrahieren in jeder Gruppe und repräsentieren die Intensitätsdifferenz jeweils für ihre Gruppe.

In der dritten Teilmessung C werden die beiden Gruppen aus der zweiten Teilmessung B wieder jeweils in der Mitte geteilt, so dass sich vier Gruppen von Sensorelementen ergeben. Auch hier wird beim Auslesen wieder für jede Gruppe ein Differenzwert gebildet, indem die Messwerte der einen Hälfte der Sensorelemente, die zur jeweiligen Gruppe gehören, positiv ausgelesen wird, während die zur anderen Hälft der Sensorelemente der jeweiligen Gruppe gehörigen Messwerte negativ ausgelesen werden. Es ergeben sich für die vier Gruppen also vier Differenzwerte.

Nach der beschriebenen Vorgehensweise werden weitere Teilmessungen durchgeführt, indem bei jeder Teilmessung gegenüber der vorausgehenden Teilmessung immer wieder die Gruppen halbiert werden, wodurch bei späteren Teilmessungen immer mehr Differenzwerte ausgelesen werden, also mehr Feininformationen über das aufzunehmende Bild zur Verfügung gestellt werden. Damit ergibt sich eine rekursive Struktur der Teilmessungen.

Maximal können so viele Teilmessungen durchgeführt werden, bis alle direkt benachbarten Sensorelemente in unmittelbarem Wechsel jeweils aufaddiert bzw. subtrahiert werden, das heißt, positiv und negativ ausgelesen werden.

In der Praxis kann gruppenweise oder insgesamt allerdings früher mit der Messung aufgehört werden, nämlich dann, wenn ein gewünschtes Maß an Auflösung erreicht ist.

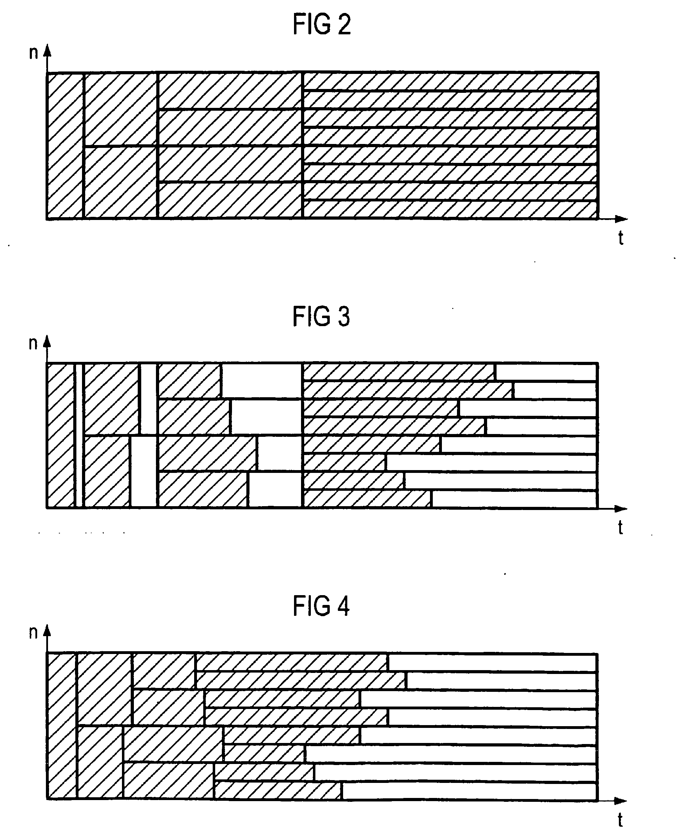

Die maximale Messzeit pro Teilmessung ist dabei umgekehrt proportional zur jeweils zusammenhängenden Fläche. Das heißt, bei der ersten Teilmessung A muss nur eine sehr kurze Belichtung erfolgen, die für die späteren Teilmessungen ansteigt. Durch den rechtzeitigen Abbruch der Folge von Teilmessungen bei Erreichen einer gewünschten Auflösung ergibt sich also eine Zeitersparnis bei der Gesamtmessung. Dazu wird mit der Teilmessung A angefangen, die die kürzeste Messzeit erfordert, und danach werden die Teilmessungen so angeordnet, dass sich ein Anstieg der Messzeiten in der Folge von Teilmessungen ergibt. Eine allgemeinere und im Rahmen der Erfindung noch wesentlichere Einsparung von Belichtungszeit ergibt sich aber aus der Tatsache, dass die Teilmessungen für die einzelnen Gruppen bei Wahl einer geeigneten Basis entkoppeln, das heißt, voneinander unabhängig werden. Dieser Effekt wird weiter unten im Detail mit Bezug auf Figur 4 erläutert.

Insgesamt summieren sich die maximalen Messzeiten nach der harmonischen Reihe auf, so dass die maximale Gesamtmesszeit gleich der Messzeit bleibt, die für eine konventionelle Aufzeichnung notwendig wäre. Hierzu addieren sich allerdings noch die Schaltzeiten, die notwendig sind, um die Sensorelemente in der erläuterten Weise zu addieren und zu subtrahieren.

Für eine normale Bildaufnahme ist es hinreichend wie im beschriebenen Ausführungsbeispiel mit einer Teilmessung A zu beginnen, bei der die Messwerte der einen Hälfte von Sensorelementen 1 bis 8 durch Parallelschalten addiert und die Messwerte der anderen Hälfte der Sensorelemente 9 bis 16 durch entgegengesetzt gepoltes Parallelschalten subtrahiert wird. Bei normalen Bildaufnahmen kommt es nämlich nur auf relative Helligkeitsabstufungen an. Soll dagegen eine Absolutmessung vorgenommen werden, so muss noch eine Teilmessung voraus- oder nachgeschaltet werden, bei der die Messwerte aller Sensoren aufaddiert werden und so die Gesamtintensität des aufzunehmenden Bildes gemessen wird.

In Figur 2 sind die Messzeiten für die Sensorelemente 1 bis 16 in einer Beispielmessung aufgetragen. Die Messzeiten ergeben sich aus der Formel

$$\Delta t_j{}^i = C \cdot (\dot{I}_j{}^i)^{-1}.$$

In den Figuren 2 bis 4 sind in die Messzeiten der Gruppen von Sensorelementen 1 bis n für die jeweiligen Teilmessungen dargestellt. In Figur 2 erkennt man den Ablauf der Messung für die einzelnen Gruppen, wenn für jede Teilmessung immer die maximale Messzeit erforderlich ist.

In der Praxis reduzieren sich aber die Messzeiten für die Teilmessungen, wenn diese jeweils nach einer ausreichenden Dauer abgebrochen werden. Dies ist in Figur 3 dargestellt. Dazu werden jeweils für die einzelnen Teilmessungen durch eine Messzeitmessung die erforderlichen Messzeiten gemessen. Für den Fall, dass die Sensoranordnung ein in einer Kamera angeordneter CCD ist, erfolgt dies beispielsweise nach folgendem Prinzip: Das auf den CCD einfallende Licht erzeugt einen Strom der die im CCD enthaltenen Kapazitäten lädt. Der Ladezustand der Kapazitäten wird in einem vorgegebenem Taktzyklus gemessen. Wenn die Kapazitäten einer Gruppe in einer Teilmessung genügend geladen sind, wird die Messzeit für diese Gruppe beendet und die Teilmessung für die Gruppe abgebrochen. Dadurch ergeben sich die in Figur 3 dargestellten Verkürzungen der Gesamtmesszeit.

In der Figur 4 entnehmbaren Vorgehensweise wird sich nun darüber hinaus der Effekt zunutze gemacht, dass die Teilmessungen für die einzelnen Gruppen bei Wahl einer geeigneten Basis entkoppeln, das heißt, voneinander unabhängig werden. Aus diesem Grund braucht man für den Beginn der Teilmessung einer Gruppe nicht zu warten, bis alle Teilmessungen beendet sind, die in der Hierarchie der rekursiven Folge von Teilmessungen eine Stufe höher stehen als die durchzuführende Teilmessung, sondern es genügt zu jedem Zeitpunkt und für jede Teilmessung einer Gruppe, wenn die Teilmessung für die Gruppe, aus der die zu messende Gruppe in der rekursiven Folge hervorgeht, beendet ist. Dadurch kann mit den Teilmessungen in der Regel jeweils früher begonnen werden und es ergibt sich der in Figur 4 dargestellte, desynchronisierte, verschachtelte Ablauf, der zu einer erheblichen Verkürzung der Gesamtmesszeit führt.

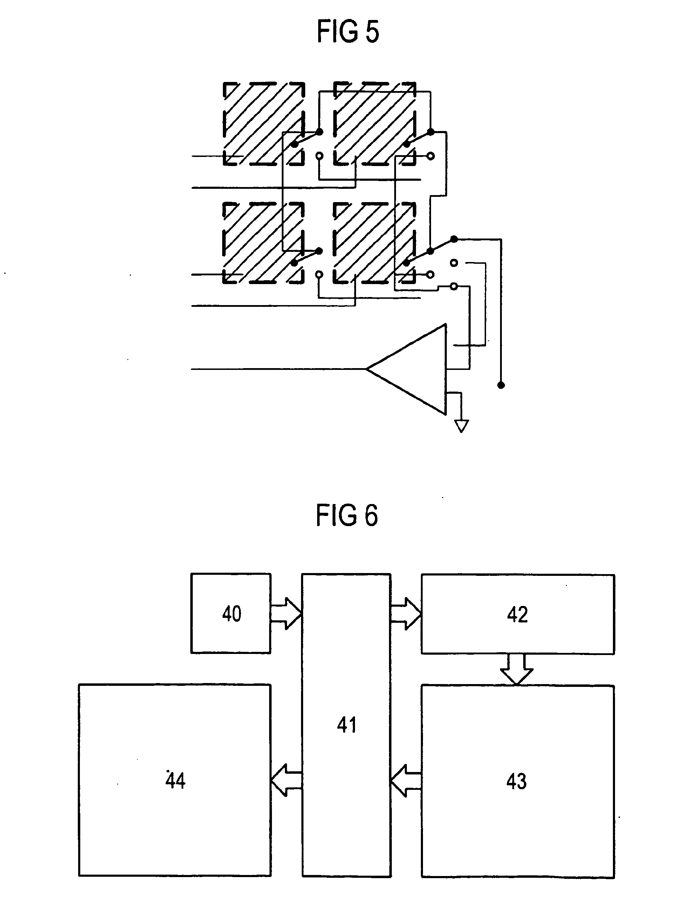

In Figur 5 sieht man ein Schaltbild für vier Gruppen von Sensorelementen mit Auslesemitteln. Zur Bildung einer vollständigen Haar-Wavelet-Basis werden in nacheinander folgenden Teilmessungen folgende Messwerte in Form von Ausgangsspannungen ausgelesen:

$$I_0 = i_1 + i_2 + i_3 + i_4,$$

$$I_1 = i_1 + i_2 - i_3 - i_4,$$

$$I_2 = i_1 - i_2 + i_3 - i_4$$

und

$$I_3 = i_1 - i_2 - i_3 + i_4,$$

wobei $I_m$, m = 0, ..., 3, den Differenzwert der Teilmessung m, also den Wert des jeweils bei der Teilmessung m gemessenen Basisvektors angibt und $i_n$, n = 1, ..., 4, den Messwert der Gruppe n von Sensorelementen.

In Figur 6 erkennt man in einem Blockdiagramm den prinzipiellen Aufbau der Sensoranordnung. Die Sensoranordnung enthält einen Taktoszillator 40, der den Takt für eine Kontrolleinheit 41 vorgibt, die eine Schalttafel 42 steuert, um die Sensorelemente 43 auszulesen. Kontrolleinheit 41 und Schalttafel 42 gehören zu den Auslesemitteln. Die gewonnenen Differenzwerte werden in einem Speicher 44 in Form eines DRAMs gespeichert.

In den bisher dargestellten Ausführungsbeispielen werden die Messwerte der Sensorelemente so addiert und subtrahiert, dass die gewonnenen Differenzwerte die Werte der Basisvektoren der Haar-Basis einer Wavelet-Transformation ergaben. Alternativ können die Messwerte der Sensorelemente auch so miteinander addiert und voneinander subtrahiert werden, dass sich die Werte der Basisvektoren einer Daubechies-, Gabor- und/oder anderen Basis ergeben. Die Verschaltung ist in diesem Fall komplizierter und die Messwerte können nicht direkt addiert und subtrahiert werden, sondern müssen beim Auslesen mit Vorfaktoren versehen werden. Dafür sind die Daubechies- und/oder Gabor-Basis für viele Anwendungsfälle in der Bildverarbeitung besonders geeignet und mit ihnen lässt sich eine höhere Kompressionsrate erzielen als mit der Haar-Basis.

Die beschriebenen Ausführungsbeispiele sind geeignet, um eine Intensitätsmessung durchzuführen. Soll eine Farbmessung durchgeführt werden, so können in bekannter Art und Weise drei Aufnahmen für die drei Grundfarben durchgeführt werden oder auf andere Art und Weise eine Farbzerlegung erfolgen. Dabei muss durchaus nicht für jede Farbe dieselbe Basis und Auflösung zur Anwendung kommen.

Die Sensoranordnung und das zugehörige Verfahren sind insbesondere für das Erstellen von Röntgenaufnahmen, für Anwendungen der Fernaufklärung und der Astrophysik sowie für die Digitalfotografie geeignet.

Insgesamt ergeben sich folgende Vorteile:

- Die gesamte Messzeit muss nicht a priori vorgegeben werden. Durch hinreichend lange Messzeit kann immer die maximale Auflösung erreicht werden. Überbelichtungseffekte treten dabei nicht auf.

- Die Messzeit kann während der Belichtung abhängig vom Ort optimiert werden.

- Ein Bild mit geringer Auflösung, das heißt sehr kurzer Aufzeichnungszeit, kann a posteriori ohne Verlust lokal weiter belichtet werden.

- Theoretisch ergibt sich eine beliebig große Aufzeichnungsdynamik. Die gleiche Hardware kann für unterschiedliche Umgebungen benutzt werden.

- Die Bildinformation liegt in kompakter Form vor, insbesondere in Form von Wavelet-Koeffizienten. Das bedeutet einen geringen Speicherbedarf und eine gute Ausgangsbasis für weitere Datenverarbeitung wie beispielsweise Kompression.

- Bei Verwacklung während eines Teils der Messzeit oder bei vorzeitiger Beendigung der Aufzeichnung ist niemals das ganze Bild unbrauchbar.

- Wird nur eine geringere Auflösung gewünscht, so hat dies eine drastisch verkürzte Messzeit zur Folge.

- Falls die Auslesemittel so ausgebildet sind, dass das Auslesen der Messwerte aus den Sensorelementen durch entsprechende Programmierung anwendungsspezifisch steuerbar ist, kann mit einer in der Hardware unveränderten Sensoranordnung je nach Anwendung die passende (Wavelet-)Basis verwendet werden.

**Patentansprüche**

1. Sensoranordnung

    - mit einer Mehrzahl von Sensorelementen (1 - 16, 43), durch die Messwerte messbar sind, und
    - mit Auslesemitteln (41, 42) zum Auslesen der Messwerte aus den Sensorelementen (1 - 16, 43),

**dadurch gekennzeichnet,**

- **dass** die Sensoranordnung so ausgebildet ist, dass zur Durchführung einer Gesamtmessung nacheinander mehrere Teilmessungen (A - D) durchgeführt werden, und
- **dass** die Auslesemittel (41, 42) Auslesemittel sind, die das Auslesen der Sensorelemente (1 - 16, 43) so steuern, dass bei den jeweiligen Teilmessungen (A - D) die Messwerte jeweils unterschiedlicher Sensorelemente addiert und subtrahiert werden.

2. Sensoranordnung nach Anspruch 1,
   **dadurch gekennzeichnet,**
   **dass** sich durch das Addieren und Subtrahieren der Messwerte bei den Teilmessungen (A - D) Werte von Basisvektoren einer Basis ergeben, in der das Ergebnis der Gesamtmessung darstellbar ist.

3. Sensoranordnung nach Anspruch 2,
   **dadurch gekennzeichnet,**
   **dass** die Basis die Basis einer Wavelet-Transformation ist.

4. Sensoranordnung nach Anspruch 3,
   **dadurch gekennzeichnet,**
   **dass** die Basis die Haar-Basis ist.

5. Sensoranordnung nach einem der vorhergehenden Ansprüche,
   **dadurch gekennzeichnet,**
   **dass** die Messwerte zumindest einiger Sensorelemente beim Addieren und Subtrahieren mit Vorfaktoren versehen werden.

6. Sensoranordnung nach den Ansprüchen 3 oder 5,
   **dadurch gekennzeichnet,**
   **dass** die Basis die Daubechies- oder die Gabor-Basis ist.

7. Sensoranordnung nach einem der vorhergehenden Ansprüche,
   **dadurch gekennzeichnet,**
   **dass** die Sensorelemente (1 - 16, 43) angeordnet sind, um räumlich verteilte Messwerte, insbesondere ein Bild, aufzunehmen.

8. Sensoranordnung nach einem der vorhergehenden Ansprüche,
   **dadurch gekennzeichnet,**
   **dass** die Sensorelemente Sensorelemente eines CCDs sind.

9. Sensoranordnung nach einem der vorhergehenden Ansprüche,
   **dadurch gekennzeichnet,**
   **dass** die Mehrzahl von Sensorelementen (1 - 16, 43) größer oder gleich 16 ist.

10. Sensoranordnung nach einem der vorhergehenden Ansprüche,
    **dadurch gekennzeichnet,**
    **dass** die Anzahl von Teilmessungen (A - D) größer oder gleich 3, insbesondere größer oder gleich 5, ist.

11. Sensoranordnung nach einem der vorhergehenden Ansprüche,
    **dadurch gekennzeichnet,**
    **dass** die Anzahl der Messwerte, die addiert werden, in etwa oder genau gleich der Anzahl der Messwerte ist, die subtrahiert werden.

12. Sensoranordnung nach einem der vorhergehenden Ansprüche,
    **dadurch gekennzeichnet,**
    **dass** im Verlauf der Teilmessungen (A - D) Sensorelemente (1 - 16, 43) zu Gruppen zusammenfassbar sind, in denen die Messwerte unterschiedlicher Sensorelemente jeweils für die Gruppe addiert und subtrahiert werden.

13. Sensoranordnung nach einem der vorhergehenden Ansprüche,

**dadurch gekennzeichnet,**
**dass** die Sensoreinrichtung eingerichtet ist, keine weiteren Teilmessungen mehr vorzunehmen, wenn eine gewünschte Auflösung erreicht ist.

14. Verfahren zum Auslesen von Messwerten aus einer Mehrzahl von Sensorelementen (1 - 16, 43), durch die Messwerte messbar sind, wobei durch Auslesemittel (41, 42) die Messwerte aus den Sensorelementen (1 - 16, 43) ausgelesen werden,
**dadurch gekennzeichnet,**

- **dass** zur Durchführung einer Gesamtmessung nacheinander mehrere Teilmessungen (A - D) durchgeführt werden und
- **dass** die Auslesemittel (41, 42) das Auslesen der Sensorelemente (1 - 16, 43) so steuern, dass bei den jeweiligen Teilmessungen (A - D) die Messwerte jeweils unterschiedlicher Sensorelemente (1 - 16, 43) addiert und subtrahiert werden.

**Claims**

1. Sensor arrangement

   - having a plurality of sensor elements (1 - 16, 43) which allow the measurement of measured values, and
   - having readout means (41, 42) for reading out the measured values from the sensor elements (1 - 16, 43),

   **characterised in that**

   - the sensor arrangement is developed in such a way that a plurality of partial measurements (A - D) are carried out consecutively in order to perform an overall measurement, and
   - the readout means (41, 42) are readout means which control the readout of the sensor elements (1 - 16, 43) in such a way that the measured values of different sensor elements in each case are added and subtracted during the relevant partial measurements (A - D).

2. Sensor arrangement according to claim 1,
   **characterised in that**
   the adding and subtracting of the measured values during the partial measurements (A - D) produce values of base vectors of a base in which the result of the overall measurement can be represented.

3. Sensor arrangement according to claim 2,
   **characterised in that**
   the base is the base of a wavelet transformation.

4. Sensor arrangement according to claim 3,
   **characterised in that**
   the base is the Haar base.

5. Sensor arrangement according to one of the preceding claims,
   **characterised in that**
   the measured values of at least some sensor elements are assigned pre-factors when adding and subtracting.

6. Sensor arrangement according to claims 3 or 5,
   **characterised in that**
   the base is the Daubechies base or the Gabor base.

7. Sensor arrangement according to one of the preceding claims,
   **characterised in that**
   the sensor elements (1 - 16, 43) are arranged for recording geometrically distributed measured values, in particular an image.

8. Sensor arrangement according to one of the preceding claims,

**characterised in that**
the sensor elements are sensor elements of a CCD.

9. Sensor arrangement according to one of the preceding claims,
   **characterised in that**
   the plurality of sensor elements (1 - 16, 43) is greater than or equal to 16.

10. Sensor arrangement according to one of the preceding claims,
    **characterised in that**
    the number of partial measurements (A - D) is greater than or equal to 3, in particular greater than or equal to 5.

11. Sensor arrangement according to one of the preceding claims,
    **characterised in that**
    the number of measured values which are added is approximately or exactly equal to the number of measured values which are subtracted.

12. Sensor arrangement according to one of the preceding claims,
    **characterised in that**
    during the partial measurements (A - D), sensor elements (1 - 16, 43) can be combined into groups in which the measured values of different sensor elements are added or subtracted for the group in each case.

13. Sensor arrangement according to one of the preceding claims,
    **characterised in that**
    the sensor apparatus is configured in such a way that no further partial measurements are taken if a desired resolution is reached.

14. Method for reading out measured values from a plurality of sensor elements (1 - 16, 43) which allow the measurement of measured values, wherein the measured values are read out from the sensor elements (1 - 16, 43) by means of readout means (41, 42),
    **characterised in that**

    - a plurality of partial measurements (A - D) are carried out consecutively in order to perform an overall measurement, and
    - the readout means (41, 42) control the readout of the sensor elements (1 - 16, 43) in such a way that the measured values of different sensor elements (1 - 16, 43) in each case are added and subtracted during the relevant partial measurements (A - D).

**Revendications**

1. Ensemble capteur

    - comprenant une pluralité d'éléments capteurs (1 - 16, 43) grâce auxquels des valeurs à mesurer peuvent être mesurées et
    - comprenant des moyens de lecture (41, 42) pour la lecture des valeurs mesurées fournies par les éléments capteurs (1 - 16, 43),

    **caractérisé en ce que**

    - l'ensemble capteur est exécuté de manière à ce que plusieurs mesures partielles (A - D) soient exécutées les unes après les autres pour exécuter une mesure globale et
    - les moyens de lecture (41, 42) sont des moyens de lecture qui commandent la lecture des éléments capteurs (1 - 16, 43) de manière à ce que, lors des mesures partielles respectives (A - D), les valeurs mesurées d'éléments capteurs différents respectifs soient additionnées et soustraites.

2. Ensemble capteur selon la revendication 1,
   **caractérisé en ce que**
   l'on obtient, en additionnant et soustrayant les valeurs mesurées, lors des mesures partielles (A - D), des valeurs de vecteurs de base d'une base dans laquelle le résultat de la mesure globale peut être représenté.

3. Ensemble capteur selon la revendication 2,
   **caractérisé en ce que**
   la base est la base d'une transformation en ondelettes.

4. Ensemble capteur selon la revendication 3,
   **caractérisé en ce que**
   la base est la base de Haar.

5. Ensemble capteur selon l'une des revendications précédentes,
   **caractérisé en ce que**
   les valeurs mesurées de quelques éléments capteurs au moins sont pourvues de pré-facteurs lors de l'addition et de la soustraction.

6. Ensemble capteur selon les revendications 3 ou 5,
   **caractérisé en ce que**
   la base est la base de Daubechies ou la base de Gabor.

7. Ensemble capteur selon l'une des revendications précédentes,
   **caractérisé en ce que**
   les éléments capteurs (1 - 16, 43) sont disposés pour capturer des valeurs mesurées réparties dans l'espace, notamment une image.

8. Ensemble capteur selon l'une des revendications précédentes,
   **caractérisé en ce que**
   les éléments capteurs sont des éléments capteurs d'un dispositif CCD.

9. Ensemble capteur selon l'une des revendications précédentes,
   **caractérisé en ce que**
   le nombre multiple d'éléments capteurs (1 - 16, 43) est supérieur ou égal à 16.

10. Ensemble capteur selon l'une des revendications précédentes,
    **caractérisé en ce que**
    le nombre de mesures partielles (A - D) est supérieur ou égal à 3, notamment supérieur ou égal à 5.

11. Ensemble capteur selon l'une des revendications précédentes,
    **caractérisé en ce que** le nombre des valeurs mesurées qui sont additionnées est à peu près ou exactement égal au nombre des valeurs mesurées qui sont soustraites.

12. Ensemble capteur selon l'une des revendications précédentes,
    **caractérisé en ce que**,
    au cours des mesures partielles (A - D), des éléments capteurs (1 - 16, 43) peuvent être réunis en groupes dans lesquels les valeurs mesurées d'éléments capteurs différents sont additionnées et soustraites à chaque fois pour le groupe.

13. Ensemble capteur selon l'une des revendications précédentes,
    **caractérisé en ce que**
    l'ensemble capteur est adapté pour ne plus exécuter de mesures partielles supplémentaires lorsqu'une résolution souhaitée est atteinte.

14. Procédé de lecture de valeurs mesurées fournies par une pluralité d'éléments capteurs (1 - 16, 43) grâce auxquels des valeurs à mesurer peuvent être mesurées, les valeurs mesurées fournies par les éléments capteurs (1 - 16, 43) étant lues par des moyens de lecture (41, 42),
    **caractérisé en ce que**

    - plusieurs mesures partielles (A - D) sont exécutées les unes après les autres pour exécuter une mesure globale et

- les moyens de lecture (41, 42) commandent la lecture des éléments capteurs (1 - 16, 43) de manière à ce que, lors des mesures partielles respectives (A - D), les valeurs mesurées d'éléments capteurs différents respectifs (1 - 16, 43) soient additionnées et soustraites.

FIG 1

## FIG 2

## FIG 3

## FIG 4

## FIG 5

## FIG 6